# EUROPEAN PATENT SPECIFICATION

(11) **EP 2 653 685 B1**
(45) Date of publication and mention of the grant of the patent: **14.01.2015**
(21) Application number: 13163402.4
(22) Date of filing: 11.04.2013
(51) Int. Cl.: F01N 3/20

(54) **Exhaust Gas Control Apparatus for Internal Combustion Engine and Injection Valve Holder**
Abgaskontrollvorrichtung für Verbrennungsmotor und Einspritzventilhalter
Appareil de commande de gaz d'échappement pour moteur à combustion interne et support de soupape d'injection

(30) Priority: 18.04.2012 JP 2012095146
(43) Date of publication of application: 23.10.2013
(73) Proprietor: Toyota Jidosha Kabushiki Kaisha, Toyota-shi, Aichi-ken 471-8571 (JP)
(72) Inventor: Aoyagi, Yusuke, Toyota-shi, Aichi-ken 471-8571 (JP)
(74) Representative: Winter, Brandl, Fürniss, Hübner, Röss, Kaiser, Polte - Partnerschaft mbB

(56) References cited:
- EP-A1- 2 105 592
- DE-A1-102009 027 185
- JP-A- 2009 041 370
- US-A1- 2011 099 974

## Description

### BACKGROUND OF THE INVENTION

### 1. Field of the Invention

The invention relates to an exhaust gas control apparatus that purifies exhaust gas discharged from an internal combustion engine, and a structure of an injection valve holder for an injection valve that is included in the exhaust gas control apparatus.

### 2. Description of Related Art

Exhaust gas discharged from internal combustion engines, such as diesel engines, contains carbon monoxide (CO), carbon hydride (HC) and nitrogen oxide (NOx), which are harmful substances, in addition to nitrogen and water vapor. Providing an exhaust gas control apparatus in order to reduce (remove) NOx is a known technique. In the exhaust gas control apparatus, a reductant injection valve and a selective catalytic reduction catalyst (SCR catalyst) are arranged in an exhaust pipe of an internal combustion engine in this order from the upstream side, and NOx in exhaust gas that flows into the SCR catalyst is reduced by ammonia (NH₃) produced from a reductant that is supplied from the reductant injection valve. An example of such an exhaust gas control apparatus for an internal combustion engine is described in Japanese Patent Application Publication No. 2009-41370 (JP 2009-41370 A). JP 2009-41370 A describes a structure in which a plurality of disc-shaped heat-dissipating fins 35b (cooling fins) that extend in the radial direction is fitted at predetermined intervals to the outer periphery of a reductant injection valve 35 that is fitted to an exhaust pipe 25 via a connecting pipe 41. The heat-dissipating fins 35b dissipate the heat transferred to the reductant injection valve 35, thereby preventing overheating of the reductant injection valve 35.

In the exhaust gas control apparatus described in JP 2009-41370 A, when the exhaust pipe vibrates due to operation of the internal combustion engine, the vibrations are transmitted to the reductant injection valve. The vibrations cause deflection of the reductant injection valve, which may raise a possibility that the direction of a spray formed by the reductant injection valve will be offset from the proper direction or a possibility that sealing performance at flanges, at which the connecting pipe and a holder that holds the reductant injection valve are fixed to each other, will be reduced. It is considered that these problems may be caused due to insufficient rigidity of the holder that holds the reductant injection valve. In particular, when a reductant injection valve is provided at an exhaust pipe that is connected to an internal combustion engine mounted on a vehicle, the above-described problems are more likely to occur because vibrations of the vehicle are also transmitted to the reductant injection valve.

### SUMMARY OF THE INVENTION

The invention provides a structure that provides a rigidity that is high enough to withstand vibrations of an exhaust pipe of an internal combustion engine, in an exhaust gas control apparatus arranged in the exhaust pipe.

A first aspect of the invention relates to an exhaust gas control apparatus for an internal combustion engine, which includes an injection valve provided at an exhaust pipe of an internal combustion engine and a catalyst provided in the exhaust pipe at a position downstream of the injection valve. The injection valve is fixed to the exhaust pipe via an injection valve holder that includes a tubular holder portion, a flange fixed to one end of the holder portion and attached to the exhaust pipe, and a cooling fin fixed to an outer periphery of the holder portion. The cooling fin is fixed to both the holder portion and the flange.

In this configuration, the cooling fin is fixed to both the holder portion and the flange. Thus, the cooling fin serves not only the cooling (heat dissipating) function but also the function as a reinforcing rib. Therefore, the cooling fin increases the rigidity of the injection valve holder, thereby making it possible to suppress occurrence of an offset of the direction of a spray formed by the injection valve from the proper direction due to the deflection of the injection valve and insufficient sealing performance at the flange.

In the above-described configuration, a plurality of the cooling fins may be formed of a plurality of plates that extend outward from the outer periphery of the holder portion. This configuration makes the rigidity of the injection valve holder higher than that in a case where only one cooling fin is provided.

In the above-described configuration, the holder portion may be formed in a cylindrical shape, the cooling fins may be formed of the plurality of plates that extend from the outer periphery of the holder portion in a radial direction of the holder portion, and the cooling fins may be disposed in a radial manner at equiangular intervals in a circumferential direction of the holder portion. With this configuration, the rigidity of the injection valve holder is improved throughout the injection valve holder in the circumferential direction of the holder portion.

In the above-described configuration, the cooling fins may vary in size and shape depending on portions of the holder portion, at which the cooling fins are disposed. Further, the cooling fins vary in length in a radial direction of the holder portion, depending on portions of the holder portion, at which the cooling fins are disposed. For example, if the cooling fin disposed at a portion of the holder portion in the circumferential direction, at which the amplitude of vibrations is larger, has a longer radial length, a higher rigidity is imparted to the portion at which the amplitude of vibrations is larger. Because the cooling fins vary in size and shape, the rigidity of a portion required to have a higher rigidity is efficiently increased.

In the above-described configuration, the cooling fin may have a hole or a protrusion. If the cooling fin has the through-hole or the protrusion, the flow of air around the cooling fin is actively made turbulent. As a result, the cooling effect produced by the cooing fin is further enhanced.

In the above-described configuration, the injection valve holder and the injection valve may be formed so as to be integrated with each other.

A second aspect of the invention relates to an injection valve holder used to fix an injection valve provided at an exhaust pipe of an internal combustion engine to supply an additive into the exhaust pipe, to the exhaust pipe. The injection valve holder includes a tubular holder portion, a flange fixed to one end of the holder portion and attached to the exhaust pipe, and a cooling fin fixed to an outer periphery of the holder portion. The cooling fin is fixed to both the holder portion and the flange.

In this configuration, the cooling fin is fixed to both the holder portion and the flange. Thus, the cooling fin serves not only the cooling (heat dissipating) function but also the function as a reinforcing rib. Therefore, the cooling fin increases the rigidity of the injection valve holder, thereby making it possible to suppress occurrence of an offset of the direction of a spray formed by the injection valve from the proper direction due to the deflection of the injection valve and insufficient sealing performance at the flange.

In the above-described configuration, a plurality of the cooling fins may be formed of a plurality of plates that extend outward from the outer periphery of the holder portion. This configuration makes the rigidity of the injection valve holder higher than that in a case where only one cooling fin is provided.

In the above-described configuration, the holder portion may be formed in a cylindrical shape, the cooling fins may be formed of the plurality of plates that extend from the outer periphery of the holder portion in a radial direction of the holder portion, and the cooling fins may be disposed in a radial manner at equiangular intervals in a circumferential direction of the holder portion. With this configuration, the rigidity of the injection valve holder is improved throughout the injection valve holder in the circumferential direction of the holder portion.

In the above-described configuration, the cooling fins may vary in size and shape depending on portions of the holder portion, at which the cooling fins are disposed. Further, the cooling fins vary in length in a radial direction of the holder portion, depending on portions of the holder portion, at which the cooling fins are disposed. For example, if the cooling fin disposed at a portion of the holder portion in the circumferential direction, at which the amplitude of vibrations is larger, has a longer radial length, a higher rigidity is imparted to the portion at which the amplitude of vibrations is larger. Because the cooling fins vary in size and shape, the rigidity of a portion required to have a higher rigidity is efficiently increased.

In the above-described configuration, the cooling fin may have a hole or a protrusion. If the cooling fin has the through-hole or the protrusion, the flow of air around the cooling fin is actively made turbulent. As a result, the cooling effect produced by the cooing fin is further enhanced.

In the above-described configuration, the cooling fin may be fixedly integrated with both the holder portion and the flange by welding or being integrated with each other.

The injection valve may be a urea solution injection valve, and the catalyst may be a selective catalytic reduction catalyst (SCR catalyst).

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view showing the schematic configuration of an exhaust gas control apparatus to which a first embodiment of the invention is applied and which is provided in an exhaust pipe of an engine that is an internal combustion engine;
FIG. 2 is an enlarged view of a urea solution injection valve in FIG. 1;
FIG. 3 is a view of the urea solution injection valve as viewed from the direction of an arrow A in FIG. 2;
FIG. 4 is a view mainly showing the structure of an injection valve holder used to fix a urea solution injection valve according to a second embodiment of the invention to the exhaust pipe, FIG. 4 corresponding to FIG. 3 that shows the first embodiment;
FIG. 5 is a view mainly showing the structure of an injection valve holder used to fix a urea solution injection valve according to a third embodiment of the invention to the exhaust pipe, FIG. 5 corresponding to FIG. 3 and FIG. 4 that show the first embodiment and the second embodiment;
FIG. 6 is a view mainly showing the structure of an injection valve holder used to fix a urea solution injection valve according to a fourth embodiment of the invention to the exhaust pipe, FIG. 6 corresponding to FIG. 3 to FIG. 5 that show the first embodiment to the third embodiment; and
FIG. 7 is a view mainly showing the structure of an injection valve holder used to fix a urea solution injection valve according to a fifth embodiment of the invention to the exhaust pipe, FIG. 7 corresponding to FIG. 2 that shows the first embodiment.

### DETAILED DESCRIPTION OF EMBODIMENTS

Hereinafter, embodiments of the invention will be described in detail with reference to the accompanying drawings. Note that, in the drawings, various portions in the following embodiments are simplified or deformed as needed and dimensional ratios and shapes of the various portions are not necessarily accurately drawn.

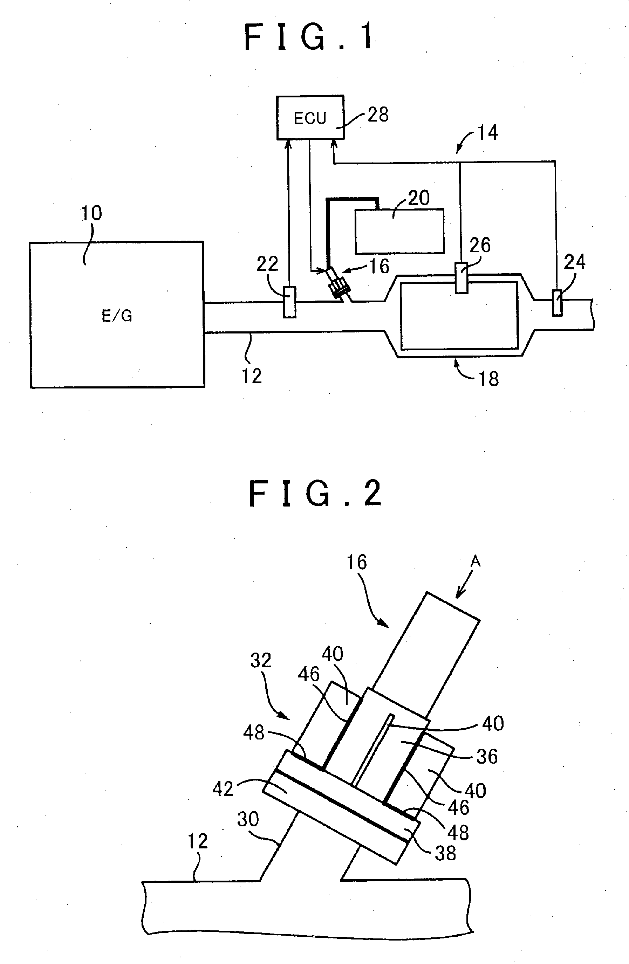

FIG. 1 schematically shows the configuration of an exhaust gas control apparatus 14 to which a first embodiment of the invention is applied and which is provided in an exhaust pipe 12 of an engine 10 that is an internal combustion engine. The exhaust gas control apparatus 14 mainly includes a urea solution injection valve (injection valve) 16 provided at the exhaust pipe 12 of the engine 10 and a known selective catalytic reduction catalyst (catalyst) 18 provided in the exhaust pipe 12 at a position downstream of the urea solution injection valve 16.

The engine 10, which is an internal combustion engine mounted on a vehicle, is, for example, a four-stroke diesel engine that has four cylinders.

The selective catalytic reduction catalyst 18 (hereinafter, referred to as "SCR catalyst 18") reduces (removes) nitrogen oxide (hereinafter, referred to as "NOx") in exhaust gas that flows in the exhaust pipe 12 by using ammonia (NH₃). For example, NO is reduced to N₂ by, for example, the reaction, 4NO + 4NH₃ + O₂ → 4N₂ + H₂O. NO₂ is reduced to N₂ by, for example, the reaction, 6NO₂ +8NH₃ → 7N₂ + 12H₂O. NO and NO₂ are reduced to N₂ by, for example, the reaction, NO + NO₂ + 2NH₃ → 2N₂ + 3H₂O. The SCR catalyst 18 has a function of storing NH₃, and is formed of zeolite, for example.

The urea solution injection valve 16 is provided in the exhaust pipe 12 at a position upstream of the SCR catalyst 18, and supplies an urea aqueous solution (hereinafter, referred to as "urea solution") as a reductant (additive) that is hydrolyzed to NH₃. The urea solution stored in a urea solution tank 20 is injected from the urea solution injection valve 16 into the exhaust pipe 12 on the basis of a command. The injected urea solution is hydrolyzed with the use of the heat of exhaust gas, by, for example, the reaction, (NH₂) 2CO + H₂O → 2NH₃ + CO₂, and NH₃ is produced.

A first NOx sensor 22 is provided in the exhaust pipe 12 at a position upstream of the urea solution injection valve 16 (at a position closer to the engine 10 than the urea solution injection valve 16), and detects the concentration of NOx in the exhaust gas that flows into the SCR catalyst 18. A second NOx sensor 24 is provided downstream of the SCR catalyst 18, and detects the concentration of NOx in the exhaust gas that flows out of the SCR catalyst 18. The SCR catalyst 18 is provided with a temperature sensor 26 that detects the bed temperature of the SCR catalyst 18. The data detected by these sensors are sent to an electronic control unit (ECU) 28.

The urea solution injection valve 16 is formed of a duty solenoid valve that adjusts the injection amount of urea solution on the basis of a change in the duty ratio of supplied current that is repeatedly turned on and off. The injection amount of urea solution is adjusted as needed on the basis of, for example, the amount of NOx that is estimated based on, for example, a rotational speed Ne of the engine 10 and an accelerator operation amount Acc, the concentration of NOx detected by the first NOx sensor 22, and the concentration of NOx detected by the second NOx sensor 24.

FIG. 2 is an enlarged view of the urea solution injection valve 16 and its surroundings. The urea solution injection valve 16 is connected to the exhaust pipe 12 via a connecting pipe 30 that is connected to the exhaust pipe 12 and an injection valve holder 32 used to fix the urea solution injection valve 16 to the connecting pipe 30. The connecting pipe 30 is part of the exhaust pipe 12 because the connecting pipe 30 is connected to the exhaust pipe 12. The connecting pipe 30 may function as an exhaust pipe according to the invention.

The injection valve holder 32 is a member used to fix (connect) the urea solution injection valve 16 to the connecting pipe 30 (the exhaust pipe 12). The injection valve holder 32 has a cylindrical holder portion 36 made of metal, such as steel or aluminum, a disc-shaped metal flange 38 that radially extends from one end of the holder portion 36, and metal cooling fins 40 that are fixedly fitted to the outer periphery of the holder portion 36.

The flange 38 is a disc-shaped member that is fixedly provided at one end of the holder portion 36, which is on the connecting pipe 30 side in the axial direction of the holder portion 36, and that extends radially from the one end. The flange 38 is attached to the exhaust pipe 12 via the connecting pipe 30. A disc-shaped flange 42 is provided at an end of the connecting pipe 30. The flange 38 on the holder portion 36 side and the flange 42 on the connecting pipe 30 side are detachably fastened (connected) together with a bolt (not shown).

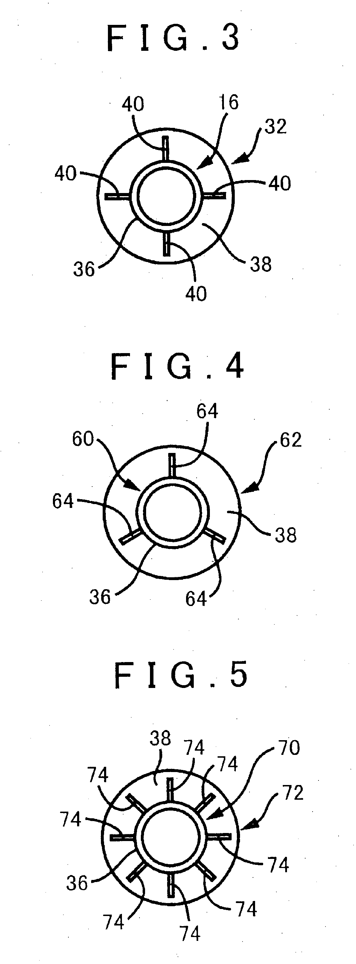

The cooling fins 40 are formed of a plurality of thin rectangular metal plates, and are fixed to the outer periphery of the holder portion 36 so as to extend radially. The cooling fins 40 are disposed in a radial manner at equiangular intervals in the circumference direction of the holder portion 36. FIG. 3 is a view of the urea solution injection valve 16 and the injection valve holder 32 as viewed from the direction of an arrow A in FIG. 2. In the present embodiment, four cooling fins 40 are disposed in a radial manner at equiangular intervals (of 90 degrees) so as to be in contact with the outer periphery of the holder portion 36.

As shown in FIG. 2, the cooling fins 40 according to the present embodiment are fixedly integrated with both the holder portion 36 and the flange 38. Specifically, the cooling fins 40 are fixedly integrated with the holder portion 36 by, for example, welding at contact faces 46 and the cooling fins 40 are fixedly integrated with the flange 38 by, for example, welding at a contact face 48, as shown by the bold lines. Alternatively, the holder portion 36, flange 38 and the cooling fins 40 may be fixed together by being integrated with each other. Due to provision of the cooling fins 40, the heat of exhaust gas that is transferred to the injection valve holder 32 is dissipated from the cooling fins 40. As a result, it is possible to prevent damage to the urea solution injection valve 16 and the injection valve holder 32 due to their overheating.

The cooling fins 40 also function as reinforcing ribs that increases the rigidity of the injection valve holder 32. If the exhaust pipe 12 vibrates during operation of the engine 10, the vibrations are transmitted toward the injection valve holder 32 via the connecting pipe 30 and the vibrations are amplified on the urea solution injection valve 16 side. If the injection valve holder 32 vibrates due to the amplified vibrations, the injection valve holder 32 is deflected, which may raise a possibility that the direction of a spray formed by the urea solution injection valve 16 fixed to the injection valve holder 32 will be offset from the proper direction or a possibility that sealing performance between the flanges 38, 42 will be reduced. However, because the cooling fins 40 according to the present embodiment are fixedly integrated with both the holder portion 36 and the flange 38, the cooling fins 40 function as reinforcing ribs of the injection valve holder 32, thereby increasing the rigidity of the injection valve holder 32. Accordingly, deflection of the injection valve holder 32 due to vibrations is suppressed, and occurrence of the above-described problems is also suppressed. Note that the shape and the number of the cooling fins 40 are set in advance based on experiments or calculations such that overheating of the urea solution injection valve 16 is prevented by the cooling fins 40 and occurrence of the above-described problems due to the vibrations transmitted to the urea solution injection valve 16 and the injection valve holder 32 is suppressed.

As described above, according to the present embodiment, because the cooling fins 40 are fixed to both the holder portion 36 and the flange 38, the cooling fins 40 serves not only the cooling (heat dissipating) function but also the function as reinforcing ribs. Therefore, the cooling fins 40 increase the rigidity of the injection valve holder 32, thereby making it possible to suppress occurrence of an offset of the direction of a spray formed by the urea solution injection valve 16 from the proper direction due to the deflection of the injection valve holder 32 and insufficient sealing performance between the flanges 38, 42.

According to the present embodiment, the holder portion 36 is formed in a cylindrical shape, and the cooling fins 40 are formed of a plurality of plates that extend radially outward from the outer periphery of the holder portion 36 and are disposed in a radial manner at equiangular intervals in the circumference direction of the holder portion 36. With this configuration, the rigidity of the injection valve holder 32 is increased substantially uniformly throughout the injection valve holder 32 in the circumference direction.

Next, a second embodiment of the invention will be described. In the following description, portions common to those in the first embodiment will be denoted by the same numerals as those in the first embodiment, and description thereof will be omitted.

FIG. 4 is a view mainly showing the structure of an injection valve holder 62 used to fix a urea solution injection valve (injection valve) 60 according to the second embodiment of the invention to the connecting pipe 30 (exhaust pipe 12), FIG. 4 corresponding to FIG. 3 that shows the first embodiment. Because the schematic configuration of an overall exhaust gas control apparatus that includes the urea solution injection valve 60 is substantially the same as that of the exhaust gas control apparatus 14 in the first embodiment, the description thereof will be omitted. In the present embodiment, three cooling fins 64 are fixed to the holder portion 36 and the flange 38, and are disposed in a radial manner at equiangular intervals (of 120 degrees) in the circumference direction of the holder portion 36. As in the first embodiment, the cooling fins 64 are fixedly integrated with both the holder portion 36 and the flange 38. Therefore, in the present embodiment as well, the cooling fins 64 serve not only the function of preventing overheating of the urea solution injection valve 60 and the injection valve holder 62 but also the function as reinforcing ribs for increasing the rigidity of the injection valve holder 62. In the present embodiment, the number of the cooling fins 64 is three, and therefore the number of components is smaller than that in the first embodiment. Note that the number of the cooling fins 64 may be further reduced as long as the cooling fins 64 prevents overheating and provides a rigidity that is high enough to suppress deflection due to vibrations.

As described above, in the present embodiment as well, it is possible to obtain advantageous effects that are substantially the same as those in the first embodiment. In addition, an increase in the number of components is suppressed because the number of the cooling fins 64 is smaller than that of the cooling fins 40 in the first embodiment.

FIG. 5 is a view mainly showing the structure of an injection valve holder 72 used to fix a urea solution injection valve (injection valve) 70 according to a third embodiment of the invention to the connecting pipe 30 (exhaust pipe 12), FIG. 5 corresponding to FIG. 3 and FIG. 4 that show the first and second embodiments. Because the schematic configuration of an exhaust gas control apparatus that includes the urea solution injection valve 70 is substantially the same as that of the exhaust gas control apparatus 14 in the first embodiment, the description thereof will be omitted. In the present embodiment, eight cooling fins 74 are fixed to the holder portion 36 and the flange 38, and are disposed in a radial manner at equiangular intervals (of 45 degrees) in the circumference direction of the holder portion 36. As in the above-described embodiments, the cooling fins 74 are fixedly integrated with both the holder portion 36 and the flange 38. Therefore, in the present embodiment as well, the cooling fins 74 serve not only the function of preventing overheating of the urea solution injection valve 70 and the injection valve holder 72 but also the function as reinforcing ribs for increasing the rigidity of the injection valve holder 72. In the present embodiment, eight cooling fins 74 are disposed in a radial manner. Therefore, the rigidity of the injection valve holder 72 and the heat dissipating effect (cooling effect) by the cooing fins 74 are both increased as compared with the above-described embodiments.

As described above, in the present embodiment as well, it is possible to obtain advantageous effects that are substantially the same as those in the above-described embodiments. In addition, the rigidity of the injection valve holder 72 and the heat dissipating effect produced by the cooing fins 74 are both increased as compared with the above-described embodiments because the number of the cooling fins 74 is larger than that in each of the above-described embodiments.

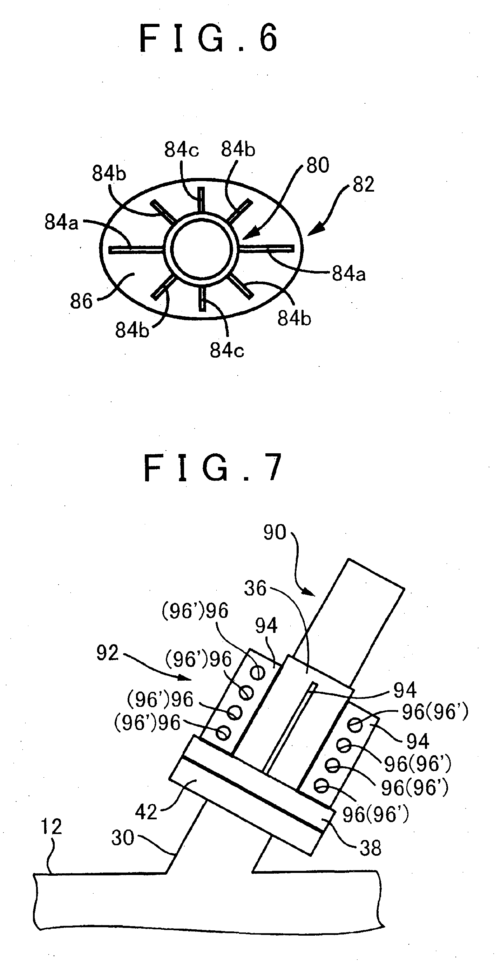

FIG. 6 is a view mainly showing the structure of an injection valve holder 82 used to fix a urea solution injection valve (injection valve) 80 according to a fourth embodiment of the invention to the connecting pipe 30 (exhaust pipe 12), FIG. 6 corresponding to FIG. 3 to FIG. 5 that show the first to third embodiments. Because the schematic configuration of an exhaust gas control apparatus that includes the urea solution injection valve 80 is substantially the same as that of the exhaust gas control apparatus 14 in the first embodiment, the description thereof will be omitted. In the present embodiment, a flange 86 is formed in an oval shape, and the radial lengths of cooling fins 84 vary depending on portions where the cooling fins 84 are disposed. Specifically, cooling fins 84a that are disposed so as to extend along the direction of the major axis of the flange 86 have the longest radial length, and cooling fins 84c that are disposed so as to extend along the direction of the minor axis of the flange 86 have the shortest radial length. Cooling fins 84b that are disposed between the cooling fins 84a and cooling fins 84c in the circumferential direction of the injection valve holder 82 have a radial length intermediate between the radial length of the cooling fins 84a and the radial length of the cooling fins 84c. Therefore, in the injection valve holder 82, the rigidity of the portions to which the cooling fins 84a are fixed is higher than the rigidity of the portions to which the cooling fins 84c are fixed. That is, in the present embodiment, the rigidity of the injection valve holder 82 varies in the circumferential direction because the cooling fins 84 vary in size and shape depending on the portions where they are disposed.

The cooling fins 84a are disposed at the portions where the amplitude of the vibrations transmitted to the injection valve holder 82 is large. That is, the cooling fins 84 disposed at portions at which the amplitude of vibrations is larger have a longer radial length and accordingly a higher rigidity is imparted to the portions at which the amplitude of vibrations is larger. Note that the portions of the injection valve holder 82 in the circumferential direction, at which the amplitude of vibrations is larger, are determined in advance based on experiments or calculations. Then, the sizes and shapes of the cooling fins 84 are set appropriately so that a higher rigidity is imparted to the portions at which the amplitude of vibrations is larger. Accordingly, a higher rigidity is imparted to the portions in the circumferential direction, at which the amplitude of vibrations is larger, that is, the portions required to have a higher rigidity. Therefore, at the portions at which the amplitude of vibrations is small, small cooling fins may be disposed or cooling fins may be omitted. On the other hand, at portions at which the amplitude of vibrations is large, large cooling fins may be disposed. In this way, it is possible to efficiently ensure the rigidity of the injection valve holder 82 as needed.

As described above, in the present embodiment as well, it is possible to obtain advantageous effects that are substantially the same as those in the first embodiment. Further, the cooling fins 84 vary in size and shape depending on the portions of the injection valve holder 82, at which they are disposed. Specifically, the cooling fins 84 disposed at the portions at which the amplitude of vibrations is larger have a longer radial length. By disposing the cooling fins 84 having a greater length at the portions of the injection valve holder 82 in the circumferential direction, at which the amplitude of vibrations is larger, a higher rigidity is imparted to the portions at which the amplitude of vibrations is larger. Because the cooling fins 84 vary in size and shape depending on the amplitude of vibrations at the portions at which they are disposed as described above, the rigidity of the portions required to have a higher rigidity is efficiently increased.

FIG. 7 is a view mainly showing the structure of an injection valve holder 92 used to fix a urea solution injection valve (injection valve) 90 according to a fifth embodiment of the invention to the connecting pipe 30 (exhaust pipe 12), FIG. 7 corresponding to FIG. 2 that shows the first embodiment. Because the schematic configuration of an exhaust gas control apparatus that includes the urea solution injection valve 90 is substantially the same as that of the exhaust gas control apparatus 14 according to the first embodiment, the description thereof will be omitted. Each cooling fin 94 according to the present embodiment has four through-holes 96 (that may function as holes in the invention). If the through-holes 96 are formed in the cooling fins 94, the flow of air around the cooling fins 94 becomes turbulent. The more turbulent the flow of air is, the higher the efficiency of heat transfer between the cooling fins 94 and air is. Therefore, the cooling effect (heat dissipating effect) by the cooling fins 94 is enhanced. As long as it is possible to make the flow of air around the cooling fins 94 turbulent, the cooling fins 94 may have semispherical or columnar protrusions 96' instead of the through-holes 96. Because the flow of air is made turbulent also by the protrusions 96', the cooling effect produced by the cooling fins 94 is further enhanced.

As described above, in the present embodiment as well, it is possible to obtain advantageous effects that are substantially the same as those in the first embodiment. Because the cooling fins 94 have the through-holes 96 or the protrusions 96', the flow of air around the cooling fins 94 is actively made turbulent. As a result, the cooling effect produced by the cooing fins 94 is further enhanced.

Although the embodiments of the invention have been described above in detail with reference to the drawing, the invention is applicable to other embodiments.

For example, in the above-described embodiments, the urea solution injection valves are described independently from each other. However, the above-described embodiments may be combined with each other as needed. For example, the through-holes 96 may be formed in the cooling fins 74 in FIG. 5.

In the above-described embodiments, the urea solution injection valves are described. However, the invention may be applied as needed to a structure for injecting an aqueous solution other than a urea aqueous solution.

In the above-described embodiments, the number of the cooling fins is three, four or eight. However, the number of the cooling fins may be changed as needed based on the cooling performance required of the cooling fins and the rigidity of the injection valve holder, which should be achieved by the cooling fins.

In the above-described embodiments, the cooling fins are formed in a rectangular shape. However, the shape of the cooling fins is not limited to a rectangular shape, and may be a triangular shape, for example. Moreover, not all the cooling fins need to have the same shape, and the cooling fins may be formed in different shapes as needed.

In the above-described embodiments, each cooling fin is formed of a flat plate having a uniform thickness. However, the thickness of each cooling fin may vary in the radial direction of the holder portion or each cooling fin may be formed of a plate having a curved face. Even in such cases, the cooling fins are fixedly integrated with both the holder portion and the flange.

In the above-described embodiments, each cooing fin is formed of a plate that extends from the outer periphery of the holder portion in the radial direction. However, the plates do not necessarily extend in the radial direction as long as they extend outward from the outer periphery of the holder portion, and the direction in which the plates extend may be changed as needed.

In the above-described embodiments, the cooing fins are disposed in a radial manner at equiangular intervals in the circumference direction of the holder portion. However, the cooling fins are not necessarily disposed in a radial manner at equiangular intervals. The intervals between the cooling fins may be changed as needed. For example, the number of the cooling fins may be larger at a portion of the holder portion, at which the amplitude of vibrations is larger.

In the above-described embodiments, the number of the through-holes 96 or the protrusions 96' of the cooing fins 94 or the shapes of the through-holes 96 or the protrusions 96' of the cooling fins 94 may be changed as needed as long as the flow of air around the cooling fins is made turbulent.

In the above-described embodiments, the SCR catalyst 18 is made of zeolite. However, another precious metal or the like may be used as an active component of the SCR catalyst 18.

In the above-described embodiments, the cooing fins are fixed to the holder portion and the flange without any gap. However, a gap may be formed at part of the fixed portions as long as the cooling fins are fixed to both the holder portion and the flange.

In the above-described embodiments, the urea solution injection valve 16 is formed of a duty solenoid valve. However, other valves that are able to adjust the injection amount of urea solution, such as a linear solenoid valve, may be used as the urea solution injection valve 16.

In the above-described embodiments, the urea solution injection valve and the injection valve holder are separate members. However, the urea solution injection valve and the injection valve holder may be formed to be integrated with each other. If the urea solution injection valve and the injection valve holder are formed to be integrated with each other, the cooling fins may extend to portions of the urea solution injection valve.

The above-described embodiments are just example embodiments of the invention, and various modifications and improvements may be made to the above-described embodiments based on the knowledge of one skilled in the art.

## Claims

1. An exhaust gas control apparatus for an internal combustion engine, the exhaust gas control apparatus including an injection valve provided at an exhaust pipe of an internal combustion engine and a catalyst provided in the exhaust pipe at a position downstream of the injection valve, **characterized in that**:
the injection valve (16, 60, 70, 80, 90) is fixed to the exhaust pipe (12) via an injection valve holder (32, 62, 72, 82, 92) that includes a tubular holder portion (36), a flange (38, 86) fixed to one end of the holder portion (36) and attached to the exhaust pipe (12), and a cooling fin (40, 64, 74, 84, 94) fixed to an outer periphery of the holder portion (36), wherein
the cooling fin (40, 64, 74, 84, 94) is fixed to both the holder portion (36) and the flange (38, 86).

2. The exhaust gas control apparatus for an internal combustion engine according to claim 1, wherein a plurality of the cooling fins (40, 64, 74, 84, 94) is formed of a plurality of plates that extend outward from the outer periphery of the holder portion (36).

3. The exhaust gas control apparatus for an internal combustion engine according to claim 2, wherein:
the holder portion (36) is formed in a cylindrical shape;
the cooling fins (40, 64, 74, 84, 94) are formed of the plurality of plates that extend from the outer periphery of the holder portion (36) in a radial direction of the holder portion (36); and
the cooling fins (40, 64, 74, 84, 94) are disposed in a radial manner at equiangular intervals in a circumferential direction of the holder portion (36).

4. The exhaust gas control apparatus for an internal combustion engine according to claim 2 or 3, wherein the cooling fins (84a, 84b, 84c) vary in size and shape depending on portions of the holder portion (36), at which the cooling fins are disposed.

5. The exhaust gas control apparatus for an internal combustion engine according to claim 4, wherein the cooling fins (84a, 84b, 84c) vary in length in a radial direction of the holder portion (36), depending on portions of the holder portion (36), at which the cooling fins are disposed.

6. The exhaust gas control apparatus for an internal combustion engine according to any one of claims 1 to 5, wherein the cooling fin (94) has a hole (96) or a protrusion (96').

7. The exhaust gas control apparatus for an internal combustion engine according to any one of claims 1 to 6, wherein the injection valve holder (32, 62, 72, 82, 92) and the injection valve (16, 60, 70, 80, 90) are formed so as to be integrated with each other.

8. An injection valve holder used to fix an injection valve provided at an exhaust pipe of an internal combustion engine to supply an additive into the exhaust pipe, to the exhaust pipe, **characterized in that**:
the injection valve holder (32, 62, 72, 82, 92) includes a tubular holder portion (36), a flange (38, 86) fixed to one end of the holder portion (36) and suitable to be attached to the exhaust pipe (12), and a cooling fin (40, 64, 74, 84, 94) fixed to an outer periphery of the holder portion (36), wherein
the cooling fin (40, 64, 74, 84, 94) is fixed to both the holder portion (36) and the flange (38, 86).

9. The injection valve holder according to claim 8, wherein a plurality of the cooling fins (40, 64, 74, 84, 94) is formed of a plurality of plates that extend outward from the outer periphery of the holder portion (36).

10. The injection valve holder according to claim 9, wherein:
the holder portion (36) is formed in a cylindrical shape;
the cooling fins (40, 64, 74, 84, 94) are formed of the plurality of plates that extend from the outer periphery of the holder portion (36) in a radial direction of the holder portion (36); and
the cooling fins (40, 64, 74, 84, 94) are disposed in a radial manner at equiangular intervals in a circumferential direction of the holder portion (36).

11. The injection valve holder according to claim 9 or 10, wherein the cooling fins (84a, 84b, 84c) vary in size and shape depending on portions of the holder portion (36), at which the cooling fins are disposed.

12. The injection valve holder according to claim 11, wherein the cooling fins (84a, 84b, 84c) vary in length in a radial direction of the holder portion (36), depending on portions of the holder portion (36), at which the cooling fins are disposed.

13. The injection valve holder according to any one of claims 8 to 12, wherein the cooling fin (94) has a hole (96) or a protrusion (96').

## Patentansprüche

1. Abgassteuerungseinrichtung für eine Brennkraftmaschine, wobei die Abgassteuerungseinrichtung ein Einspritzventil, welches an einem Abgasrohr einer Brennkraftmaschine vorgesehen ist, und einen Katalysator aufweist, der in dem Abgasrohr an einer stromabwärtigen Position des Einspritzventils vorgesehen ist, **dadurch gekennzeichnet, dass**:
das Einspritzventil (16, 60, 70, 80, 90) an das Abgasrohr (12) über eine Einspritzventilhaltevorrichtung (32, 62, 72, 82, 92) befestigt ist, die einen rohrförmigen Haltevorrichtungsabschnitt (36), einen Flansch (38, 86), der an ein Ende des Haltevorrichtungsabschnitts (36) befestigt und an das Abgasrohr (12) angebracht ist, und eine Kühlrippe (40, 64, 74, 84, 94) aufweist, die an einen Außenumfang des Haltevorrichtungsabschnitts (36) befestigt ist, wobei
die Kühlrippe (40, 64, 74, 84, 94) an dem Haltevorrichtungsabschnitt (36) sowie an dem Flansch (38, 86) befestigt ist.

2. Abgassteuerungseinrichtung für eine Brennkraftmaschine nach Anspruch 1, wobei eine Vielzahl von Kühlrippen (40, 64, 74, 84, 94) aus einer Vielzahl von Platten, welche von dem Außenumfang des Haltevorrichtungsabschnitts (36) nach außen verlaufen, ausgebildet ist.

3. Abgassteuerungseinrichtung für eine Brennkraftmaschine nach Anspruch 2, wobei:
der Haltevorrichtungsabschnitt (36) in einer zylindrischen Form ausgebildet ist;
die Kühlrippen (40, 64, 74, 84, 94) aus einer Vielzahl von Platten ausgebildet sind, die von dem Außenumfang des Haltevorrichtungsabschnitts (36) in einer Radialrichtung des Haltevorrichtungsabschnitts (36) verlaufen; und
die Kühlrippen (40, 64, 74, 84, 94) radial mit gleichwinkligen Intervallen in einer Umfangsrichtung des Haltevorrichtungsabschnitts (36) angeordnet sind.

4. Abgassteuerungseinrichtung für eine Brennkraftmaschine nach Anspruch 2 oder 3, wobei die Kühlrippen (84a, 84b, 84c) sich in einer Größe und einer Form abhängig von Abschnitten des Haltevorrichtungsabschnitts (36), an welchem die Kühlrippen angeordnet sind, unterscheiden.

5. Abgassteuerungseinrichtung für eine Brennkraftmaschine nach Anspruch 4, wobei die Kühlrippen (84a, 84b, 84c) sich in einer Länge in einer Radialrichtung des Haltevorrichtungsabschnitts (36) in Abhängigkeit von Abschnitten des Haltevorrichtungsabschnitts (36), an welchem die Kühlrippen angeordnet sind, unterscheiden.

6. Abgassteuerungseinrichtung für eine Brennkraftmaschine nach einem der Ansprüche 1 bis 5, wobei die Kühlrippe (94) eine Ausnehmung (96) oder einen Vorsprung (96') aufweist.

7. Abgassteuerungseinrichtung für eine Brennkraftmaschine nach einem der Ansprüche 1 bis 6, wobei die Einspritzventilhaltevorrichtung (32, 62, 72, 82, 92) und das Einspritzventil (16, 60, 70, 80, 90) so ausgebildet sind, um miteinander integriert zu sein.

8. Einspritzventilhaltevorrichtung, verwendet, um ein Einspritzventil, welches in einem Abgasrohr einer Brennkraftmaschine zum Zuführen eines Zusatzes in das Abgasrohr vorgesehen ist, an das Abgasrohr zu befestigen,
**dadurch gekennzeichnet, dass**
die Einspritzventilhaltevorrichtung (32, 62, 72, 82, 92) einen rohrförmigen Haltevorrichtungsabschnitt (36), einen Flansch (38, 86), der an ein Ende des Haltevorrichtungsabschnitts (36) befestigt ist und zum Anbringen an das Abgasrohr (12) geeignet ist, und eine Kühlrippe (40, 64, 74, 84, 94) aufweist, die an einen Außenumfang des Haltevorrichtungsabschnitts (36) befestigt ist, wobei
die Kühlrippe (40, 64, 74, 84, 94) an den Haltevorrichtungsabschnitt (36) und an den Flansch (38, 86) befestigt ist.

9. Einspritzventilhaltevorrichtung nach Anspruch 8, wobei eine Vielzahl von Kühlrippen (40, 64, 74, 84, 94) aus einer Vielzahl von Platten, welche von dem Außenumfang des Haltevorrichtungsabschnitts (36) nach außen verlaufen, ausgebildet sind.

10. Einspritzventilhaltevorrichtung nach Anspruch 9, wobei
der Haltevorrichtungsabschnitt (36) in einer zylindrischen Form ausgebildet ist;
die Kühlrippen (40, 64, 74, 84, 94) aus einer Vielzahl von Platten ausgebildet sind, die von dem Außenumfang des Haltevorrichtungsabschnitts (36) in einer Radialrichtung des Haltevorrichtungsabschnitts (36) verlaufen; und
die Kühlrippen (40, 64, 74, 84, 94) radial mit gleichwinkligen Intervallen in einer Umfangsrichtung des Haltevorrichtungsabschnitts (36) angeordnet sind.

11. Einspritzventilhaltevorrichtung nach Anspruch 9 oder 10, wobei die Kühlrippen (84a, 84b, 84c) sich in einer Größe und einer Form abhängig von Abschnitten des Haltevorrichtungsabschnitts (36), an welchem die Kühlrippen angeordnet sind, unterscheiden.

12. Einspritzventilhaltevorrichtung nach Anspruch 11, wobei die Kühlrippen (84a, 84b, 84c) sich in einer Länge in einer Radialrichtung des Haltevorrichtungsabschnitts (36) in Abhängigkeit von Abschnitten des Haltevorrichtungsabschnitts (36), an welchem die Kühlrippen angeordnet sind,
unterscheiden.

13. Einspritzventilhaltevorrichtung nach einem der Ansprüche 8 bis 12, wobei die Kühlrippe (94) eine Ausnehmung (96) oder einen Vorsprung (96') aufweist.

## Revendications

1. Dispositif de commande de gaz d'échappement pour un moteur à combustion interne, le dispositif de commande de gaz d'échappement incluant une soupape d'injection placée au niveau d'un tuyau d'échappement d'un moteur à combustion interne et un catalyseur placé dans le tuyau d'échappement en une position en aval de la soupape d'injection, **caractérisé en ce que** :
la soupape d'injection (16, 60, 70, 80, 90) est fixée sur le tuyau d'échappement (12) via un support de soupape d'injection (32, 62, 72, 82, 92) qui inclut une partie de support tubulaire (36), un rebord (38, 86) fixé sur une extrémité de la partie de support (36) et fixé sur le tuyau d'échappement (12), et une ailette de refroidissement (40, 64, 74, 84, 94) fixée sur une périphérie extérieure de la partie de support (36), dans lequel
l'ailette de refroidissement (40, 64, 74, 84, 94) est fixée sur à la fois la partie de support (36) et le rebord (38, 86).

2. Dispositif de commande de gaz d'échappement pour un moteur à combustion interne selon la revendication 1, dans lequel une pluralité d'ailettes de refroidissement (40, 64, 74, 84, 94) est formée d'une pluralité de plaques qui s'étendent vers l'extérieur depuis la périphérie extérieure de partie de support (36).

3. Dispositif de commande de gaz d'échappement pour un moteur à combustion interne selon la revendication 2, dans lequel :
la partie de support (36) est formée en une forme cylindrique ;
les ailettes de refroidissement (40, 64, 74, 84, 94) sont formées de la pluralité de plaques qui s'étendent depuis la périphérie extérieure de la partie de support (36) dans une direction radiale de la partie de support (36) ; et
les ailettes de refroidissement (40, 64, 74, 84, 94) sont disposées d'une manière radiale à intervalles équiangulaires dans une direction circonférentielle de la partie de support (36).

4. Dispositif de commande de gaz d'échappement pour un moteur à combustion interne selon la revendication 2 ou 3, dans lequel les ailettes de refroidissement (84a, 84b, 84c) varient en taille et en forme en fonction des parties de la partie de support (36) au niveau desquelles les ailettes de refroidissement sont disposées.

5. Dispositif de commande de gaz d'échappement pour un moteur à combustion interne selon la revendication 4, dans lequel les ailettes de refroidissement (84a, 84b, 84c) varient en longueur dans une direction radiale de la partie de support (36), en fonction des parties de la partie de support (36), au niveau desquelles les ailettes de refroidissement sont disposées.

6. Dispositif de commande de gaz d'échappement pour un moteur à combustion interne selon l'une quelconque des revendications 1 à 5, dans lequel l'ailette de refroidissement (94) comporte un trou (96) ou une saillie (96').

7. Dispositif de commande de gaz d'échappement pour un moteur à combustion interne selon l'une quelconque des revendications 1 à 6, dans lequel le support de soupape d'injection (32, 62, 72, 82, 92) et la soupape d'injection (16, 60, 70, 80, 90) sont formées de façon à être intégrées ensemble.

8. Support de soupape d'injection utilisé pour fixer une soupape d'injection placée au niveau d'un tuyau d'échappement d'un moteur à combustion interne pour fournir un additif dans le tuyau d'échappement, sur un tuyau d'échappement, **caractérisé en ce que** :
le support de soupape d'injection (32, 62, 72, 82, 92) inclut une partie de support tubulaire (36) un rebord (38, 86) fixé sur une extrémité de la partie de support (36) et convenant pour être fixé sur le tuyau d'échappement (12), et une ailette de refroidissement (40, 64, 74, 84, 94) fixée sur une périphérie extérieure de la partie de support (36), dans lequel
l'ailette de refroidissement (40, 64, 74, 84, 94) est fixée sur à la fois la partie de support (36) et le rebord (38, 86).

9. Support de soupape d'injection selon la revendication 8, dans lequel une pluralité des ailettes de refroidissement (40, 64, 74, 84, 94) est formée d'une pluralité de plaques qui s'étendent vers l'extérieur depuis la périphérie extérieure de la partie de support (36).

10. Support de soupape d'injection selon la revendication 9, dans lequel
la partie de support (36) est formé en une forme cylindrique ;
les ailettes de refroidissement (40, 64, 74, 84, 94) sont formées de la pluralité de plaques qui s'étendent depuis la périphérie extérieure de la partie de support (36) dans une direction radiale de la partie de support (36) ; et
les ailettes de refroidissement (40, 64, 74, 84, 94) sont disposées d'une manière radiale à intervalles équiangulaires dans une direction circonférentielle de la partie de support (36).

11. Support de soupape d'injection selon la revendication 9 ou 10, dans lequel les ailettes de refroidissement (84a, 84b, 84c) varient en taille et en forme en fonction des parties de la partie de support (36), au niveau desquelles les ailettes de refroidissement sont disposées.

12. Support de soupape d'injection selon la revendication 11, dans lequel les ailettes de refroidissement (84a, 84b, 84c) varient en longueur dans une direction radiale de la partie de support (36), en fonction des parties de la partie de support (36), au niveau desquelles les ailettes de refroidissement sont disposées.

13. Support de soupape d'injection selon l'une quelconque des revendications 8 à 12, dans lequel l'ailette de refroidissement (94) comporte un trou (96) ou une saillie (96').
